## Europäisches Patentamt
## European Patent Office
## Office européen des brevets

(11) Publication number: **0 203 187 B1**

# EUROPEAN PATENT SPECIFICATION

(45) Date of publication of patent specification: **26.09.90**

(51) Int. Cl.⁵: **G 01 P 1/00**

(21) Application number: **86900403.6**

(22) Date of filing: **27.11.85**

(86) International application number: **PCT/US85/02362**

(87) International publication number: **WO 86/03300 05.06.86 Gazette 86/12**

(54) MOUNTING SYSTEM FOR PRECISION TRANSDUCER.

(30) Priority: **30.11.84 US 676724**

(43) Date of publication of application:
**03.12.86 Bulletin 86/49**

(45) Publication of the grant of the patent:
**26.09.90 Bulletin 90/39**

(84) Designated Contracting States:
**CH FR IT LI**

(56) References cited:
**US-A-3 601 343**
**US-A-4 190 782**
**US-A-4 266 157**

(73) Proprietor: **SUNDSTRAND DATA CONTROL, INC.**
**Overlake Industrial Park**
**Redmond, WA 98052 (US)**

(72) Inventor: **NORLING, Brian, L.**
**10036 Ravenna Avenue, North East**
**Seattle, WA 98125 (US)**

(74) Representative: **Marshall, John Grahame**
**SERJEANTS 25 The Crescent King Street**
**Leicester LE1 6RX (GB)**

Courier Press, Leamington Spa, England.

## Description

### Technical field

The present invention relates to mounting systems for precision transducers and, in particular, to a stress-free mounting system for a transducer such as an accelerometer.

### Background of the invention

It is often necessary to isolate a precision transducer from external stress. Such stress may be caused by mechanical distortion of the case or other structure to which the transducer is mounted, or by differential thermal expansion or contraction between the transducer and the case. Isolation from external stress can in principle be achieved by using a compliant mounting system. However, a compliant mounting system will not in general provide precise and stable alignment of the transducer with respect to its case. For many transducers, such alignment is critical for achieving proper operation. A compliant mounting system may also result in unwanted mechanical oscillation of the transducer when the case is exposed to vibration.

One type of precision transducer that is especially susceptible to external stress is an accelerometer. An accelerometer is an example of an instrument that must not be allowed to change position or vibrate with respect to its case. One prior accelerometer mounting technique has been to connect the accelerometer to the case by means of a metal ring or by means of a structural adhesive such as an epoxy resin. These prior noncompliant mounting techniques result in stress being transmitted to the accelerometer due to differential thermal expansion between the accelerometer and the mounting ring and case. These prior techniques also transmit stress to the accelerometer when the case is subjected to mechanical distortion. Distortion can be induced by mounting the case to a surrounding support, or by differential thermal expansion between the case and the support. All such stresses may affect the output of a precision accelerometer, and may result in reduced stability. The temperature induced stresses also may lead to increased variation of accelerometer output with temperature, and may create thermally induced errors in the accelerometer output. Attempts have been made to overcome distortion by working a degree of compliance into the mounting. An example of a compliant mounting is described in US—A—3601343. US—A—4266157 shows how attempts have also been made to overcome differential thermal stresses by matching the coefficient of thermal expansion of adjacent surfaces of a mounting.

### Summary of the invention

The present invention provides a mounting system for a precision transducer such as an accelerometer. The mounting system is compliant to differential volumetric expansion but rigid against rotation or translation of the transducer with respect to the case.

In one preferred embodiment, the mounting system of the present invention is adapted to support a precision transducer in spaced alignment with a supporting case. The mounting system comprises a plurality of mounting means, each mounting means having first and second ends and a resilient intermediate portion, the first end of each mounting means being connected to the trasnducer, the second end of each mounting means being connected to the case, at least the first end being composed of a substance that has a coefficient of thermal expansion approximately equal to the coefficient of thermal expansion of the transducer, the intermediate portion of each mounting means being adapted to provide a low resistance to relative movement between the transducer and case in a radial direction and a high resistance to relative movement between the transducer and case in directions normal to the radial direction, whereby differential thermal expansion or contraction between the transducer and case do not stress the transducer or cause misalignment between the transducer and the case, and characterised in that the first ends of adjacent mounting means are joined to one another by means of bridge sections, such that the mounting means and bridge sections form a continuous, mounting ring, the bridge sections being composed of a substance having a coefficient of thermal expansion approximately equal to the coefficient of thermal expansion of the transducer.

### Brief description of the drawings

Figure 1 is a perspective view of an accelerometer mounted in a case by the mounting system of the present invention;

Figure 2 is a perspective view of the mounting ring of Figure 1;

Figure 3 is a cross-sectional view showing the connection of one mounting element between the transducer and the case;

Figure 4 is a side-elevational view of a portion of the mounting ring.

### Detailed description of the invention

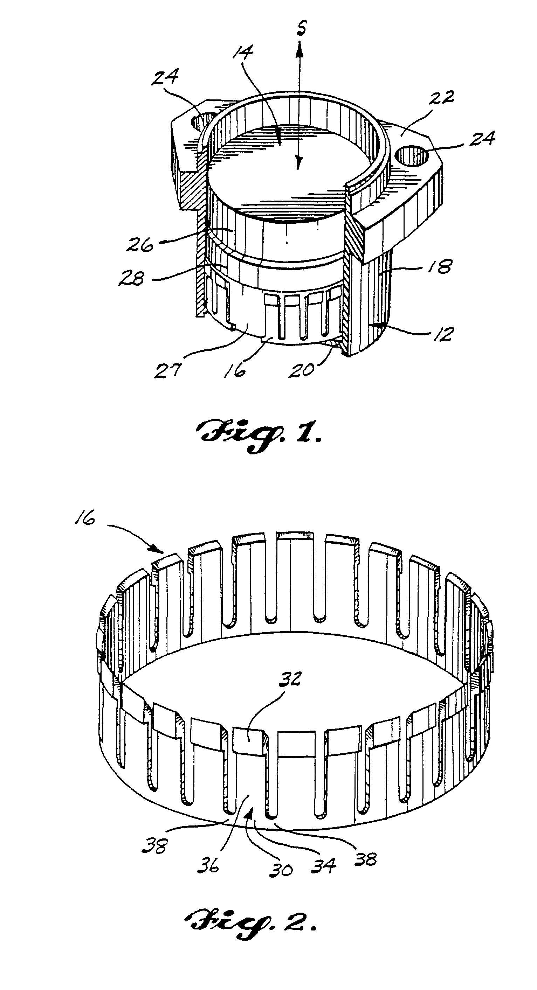

Figure 1 shows an accelerometer mounted by means of the mounting system of the present invention. The accelerometer of Figure 1 includes case 12, transducer 14 and mounting ring 16. Case 12 includes cylindrical sidewall 18, bottom wall 20 and flange 22. Flange 22 includes mounting holes 24 that are used to mount the case and accelerometer to a supporting structure.

Transducer 14 has a cylindrical overall shape and comprises excitation rings 26 and 27 joined by bellyband 28. The transducer is adapted to respond to accelerations along sensitive axis S by producing an electrical signal that indicates the direction and magnitude of such acceleration. The transducer is mounted to the case at excitation ring 27 by mounting ring 16. As described below, the mounting ring provides precise and stable alignment of the transducer, such that the transducer is not free to undergo translational or rotational movement with respect to the case. However, the mounting ring does permit differential radial or volumetric thermal expansion or contraction between the transducer and the case, and also serves to isolate the transducer from stresses that would otherwise result from distortion of the case. Distortion of the case may be caused by mounting the flange to a surface that is not perfectly flat, or by differential thermal expansion between the flange and the support.

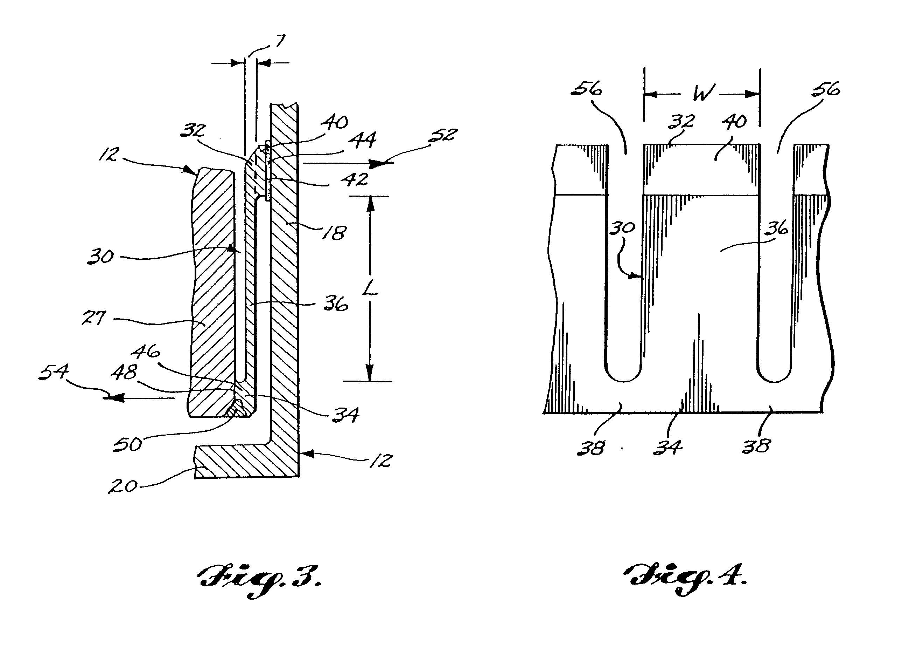

Mounting ring 16 is illustrated in greater detail in Figure 2. The mounting ring comprises a plurality of mounting elements 30, each mounting element comprising upper end 32 and lower end 34 joined by resilient beam 36. As described below, the upper ends of the mounting elements are attached to the case, and the lower ends are attached to the transducer. The lower end of each mounting element is joined to the lower ends of adjacent mounting elements by bridge sections 38. The bridge sections thereby join the mounting elements into a single, cylindrical mounting ring, as illustrated in Figure 2. It is not required for the practice of the present invention that the mounting elements be joined to one another by bridge sections 38. However the use of bridge sections is preferred because it significantly facilitates manufacturing and assembly of the accelerometers.

Figures 3 and 4 illustrate further details of the mounting elements and of the connection between the mounting elements and the transducer and case. As best illustrated in Figure 3, upper end 32 of mounting element 30 includes pad 40 that includes outwardly facing surface 42. Surface 42 preferably has a cylindrical contour that matches the contour of the adjacent inner wall of sidewall 18 of case 12. Pad 40 is joined to sidewall 18 by adhesive layer 44. A suitable material for adhesive layer 44 is a structural adhesive such as an epoxy resin. Lower end 34 of mounting element 30 includes inwardly projecting flange 46, flange 46 having a cylindrical inner surface 48 that has a contour that matches the contour of the adjacent outer surface of excitation ring 27 of transducer 14. The cross sections of bridge sections 38 (Figure 4) may be similar to the cross sections of flanges 46, such that the bridge sections together with the lower ends of the mounting elements form a ring having a continuous, cylindrical inner surface. The radius of such inner surface is dimensioned to match the radius of the adjacent outer surface of excitation ring 27. The mounting ring is joined to the excitation ring by a process, such as welding or brazing, that produces a rigid and integral bond between the mounting ring and the transducer. Figure 3 illustrates the use of weld joint 50 to create the bond between flange 46 and excitation ring 27. The point of attachment of the transducer to the mounting ring is preferably spaced as far as possible from flange 22 of case 12, in order to minimize the transmission of stress from the flange to the transducer.

It is an important aspect of the present invention that the mounting ring is attached to the transducer in such a way that minimal stress is produced when the transducer and mounting ring undergo thermal expansion or contraction. This result is achieved by fabricating at least lower ends 34 and bridge sections 38 from a material that has a coefficient of thermal expansion approximately equal to the coefficient of thermal expansion of the transducer, and in particular of excitation ring 27. An intervening layer of material between the mounting ring and the transducer (e.g., an adhesive layer) should generally not be used unless the intervening layer has a coefficient of thermal expansion approximately equal to that of the transducer and mounting ring. Similarly, where a welding or brazing process is used to join the mounting ring to the transducer, any filler metal or brazing material used should have a coefficient of thermal expansion matched to the coefficient of thermal expansion of the transducer and mounting ring. In a preferred embodiment, mounting ring 16 is entirely fabricated from a metal identical to the metal forming excitation ring 27, and is welded to excitation ring 27 without the use of a filler metal. Because of its low coefficient of thermal expansion, Invar, a 36% nickel-iron alloy, is a particularly suitable metal with which to form excitation ring 27 and mounting ring 16.

In general, it will not be practical to match the coefficient of thermal expansion of the mounting ring to the coefficient of thermal expansion of case 12 or adhesive layer 44. Upper ends 32 of mounting elements 30 are therefore preferably not abutting or joined to one another, but are instead spaced apart by gaps 56 (Figure 4). Such gaps eliminate or greatly reduce the high hoop stress that would otherwise occur due to differential thermal expansion or contraction between the mounting ring and the adhesive layer and case. Similar gaps are not required between lower ends 34 of mounting elements 30, because the coefficient of thermal expansion of the mounting ring is matched to that of the excitation ring to which the mounting ring is attached.

Each beam 36 is dimensioned such that the beam has a compliant axis oriented in the radial direction indicated by arrows 52 and 54 of Figure 3. The compliant axis of each beam preferably intersects the centerline of the transducer. However, the beam is dimensioned such that it is rigid in directions normal to arrows 52 and 54, i.e., along the length L of the beam and in the directions into and out of the plane of the drawing in Figure 3. Differential radial or volumetric thermal expansion (or contraction) between the transducer, mounting ring and case therefore results in differential movement between the transducer and case along the compliant axes of the beams. The beams therefore flex to take up the differential movement without transmitting significant stress to the transducer. However, the ridigity of beams 36 normal to their compliant axes results in a mounting system in which the transducer is not free to rotate or to undergo overall translational movement with respect to the case.

The required compliant characteristics of beam 36 are preferably achieved by making the width W and length L of each beam substantially greater than the thickness T of that beam. The width W of each beam must, of course, be limited (with respect to the circumference of the mounting ring) such that each beam is essentially planar and compliant in a radial direction. In general, width-to-thickness ratios between about 10:1 and 20:1 are most suitable, although other ratios may be used, depending on the nature of the transducer and the mounting ring materials. One preferred mounting ring comprises 24 mounting elements, the beam of each mounting element having a length-to-thickness ratio of about 21:1, and a width-to-thickness ratio of about 12:1. The distance between adjacent mounting elements, i.e., the width of gaps 56, should be large enough to avoid interference between the beams due to thermal expansion or seismic inputs. Referring to Figure 3, the distances that pad 40 and flange 46 extend from the plane of beam 36 should similarly be large enough to avoid interference between the beams and the transducer and case.

## Claims

1. A mounting system for supporting a precision transducer (14) in spaced alignment with a supporting case (12), the mounting system comprising a plurality of mounting means (30), each mounting means having first and second ends (34, 32) and a resilient intermediate portion (36), the first end (34) of each mounting means (30) being connected to the transducer (14), the second end (32) of each mounting means (30) being connected to the case (12), at least the first end (34) being composed of a substance that has a coefficient of thermal expansion approximately equal to the coefficient of thermal expansion of the transducer (14), the intermediate portion (36) of each mounting means (30) being adapted to provide a low resistance to relative movement between the transducer (14) and case (12) in a radial direction and a high resistance to relative movement between the transducer (14) and case (12) in directions normal to the radial direction, whereby differential thermal expansion or contraction between the transducer and case do not stress the transducer or cause misalignment between the transducer and the case, and characterised in that the first ends (34) of adjacent mounting means (30) are joined to one another by means of bridge sections (38), such that the mounting means (30) and bridge sections (38) form a continuous, mounting ring (16), the bridge sections (38) being composed of a substance having a coefficient of thermal expansion approximately equal to the coefficient of thermal expansion of the transducer (14).

2. A mounting system according to claim 1 wherein each intermediate portion (36) comprises a beam having one compliant axis and two noncompliant axes normal to each other and to the compliant axis, each beam having its compliant axis oriented in the radial direction.

3. A mounting system according to claim 2, wherein the width (W) and length (L) of each beam are substantially greater than the thickness (T) of the beam such that the compliant axis of the beam corresponds to the thickness dimension (T), and wherein the thickness dimension (T) of the beam is aligned with the radial direction, whereby the beam has a relatively small resistance to differential thermal expansion between the transducer and the case, and a high resistance to overall translation and rotation of the transducer with respect to the case.

4. The mounting system of claim 2 or claim 3 wherein the transducer (14) is generally cylindrical in shape, wherein the compliant axis of each beam intersects the centerline of the transducer (14), and wherein the length dimension (L) of each beam is aligned with the cylindrical axis of the transducer (14).

5. The mounting system according to claim 4 wherein the first ends (34) and the bridge sections (38) form a continuous, cylindrical, inwardly facing mounting surface, and wherein the mounting ring (16) is connected to the transducer (14) at the mounting surface.

6. A mounting system according to claim 5 wherein the transducer (14) includes a cylindrical mounting section (27), wherein the mounting ring (16) is connected to the transducer (14) at said mounting section (27) and wherein the mounting section (27) and the mounting ring (16) are composed of the same substance.

7. A mounting system according to claim 6 wherein the mounting ring (16) is connected to the mounting section (27) by welding.

8. A mounting system according to any preceding claim wherein the substance is Invar.

9. A mounting system according to any preceding claim wherein the second ends (32) of adjacent mounting means (30) are separated from one another by gaps.

10. A mounting system according to any preceding claim wherein the second end (32) of each mounting means (30) is connected to the case (12) by means of an adhesive.

## Patentansprüche

1. Befestigungssystem, mit dem ein Präzisionsumformer (14) in einem Gehäuse (12) mit Abstand von diesem und mit ihm fluchtend abgestützt wird, betehend aus einer Vielzahl von Befestigungselementen (30), die jeweils einen ersten und einen zweiten Endabschnitt (34, 32) sowie einen federnden Mittelabschnitt (36) aufweisen, wobei der erste Endabschnitt (34) jedes Befestigungselementes (30) mit dem Umformer (14) und der zweite Endabschnitt (32) jedes Befestigungselementes (30) mit dem Gehäuse (12) verbunden ist, wobei mindestens der erste Endabschnitt (34) aus einem Material besteht, das einen Wärmeausdehnungskoeffizienten aufweist, der annähernd gleich dem Wärmeausdehnungskoeffizienten des Umformers (14) ist, wobei der Mittelabschnitt (36) jedes Befestigungselementes (30) derart ausgebildet ist, daß er mit Bezug auf die radiale Relativbewegung zwischen Umformer (14) und Gehäuse (12) einen geringen Widerstand und mit Bezug auf die zur radialen Richtung senkrechten Relativbewegungen zwischen Umformer (14) und Gehäuse (12) einen hohen Widerstand aufweist, so daß bei unterschiedlicher Wärmeausdehnung oder Kontraktion von Umformer und Gehäuse der Umformer keine Spannungsbeanspruchung erfährt und zwischen Umformer und Gehäuse kein Fluchtungsfehler entsteht, dadurch gekennzeichnet dass die ersten Endabschnitte (34) nebeneinanderliegender Befestigungselemente (30) durch Brückenabschnitte (38) miteinander verbunden sind, wodurch aus den Befestigungselementen (30) und Brückenabschnitten (38) ein durchgehender Befestigungsring (16) gebildet wird, und die Brückenabschnitte (38) aus einem Material bestehen, das einen Wärmeausdehnungskoeffizienten aufweist, der annähernd gleich dem Wärmeausdehnungskoeffizienten des Umformers (14) ist.

2. Befestigungssystem gemäß Anspruch 1, bei dem jeder Mittelabschnitt (36) aus einem Steg mit einer federnden Achse und zwei nichtfedernden, senkrecht zueinander und zur federndern Achse liegenden Achsen besteht, und die federnde Achse jedes Stegs in radialer Richtung liegt.

3. Befestigungssystem gemäß Anspruch 2, bei dem die Breite (W) und Länge (L) jedes Stegs wesentlich größer als die Dicke (T) des Stegs sind, und die federnde Achse des Stegs der Dickendimension (T) entspricht und die Dickendimension (T) des Stegs mit der Radialrichtung fluchtet, wobei der Steg gegenüber unterschiedlicher Wärmeausdehnung von Umformer und Gehäuse einen relativ geringen Widerstand und gegenüber Gesamtumsetzung und Drehung des Umformers mit Bezug auf das Gehäuse einen hohen Widerstand aufweist.

4. Befestigungssystem gemäß Anspruch 2 oder 3, bei dem der Umformer (14) eine allgemein zylindrische Form aufweist, und die federnde Achse jedes Stegs sich mit der Mittellinie des Umformers (14) schneidet, und wobei die Längendimension (L) jedes Stegs mit der zylindrischen Achse des Umformers (14) fluchtet.

5. Befestigungssystem gemäß Anspruch 4, bei dem die ersten Endabschnitte (34) zusammen mit den Brückenabschnitten (38) eine durchgehende, zylindrische, nach innen weisende Befestigungsfläche bilden, und wobei der Befestigungsring (16) über die Befestigungsfläche mit dem Umformer (14) verbunden ist.

6. Befestigungssystem gemäß Anspruch 5, bei dem der Umformer (14) einen zylindrischen Befestigungsabschnitt (27) aufweist, über den der Befestigungsring (16) mit dem Umformer (14) verbunden ist und wobei der Befestigungsabschnitt (27) und der Befestigungsring (16) aus dem gleichen Material bestehen.

7. Befestigungssystem gemäß Anspruch 6, bei dem der Befestigungsring (16) an den Befestigungsabschnitt (27) angeschweißt ist.

8. Befestigungssystem gemäß einem der vorhergehenden Ansprüche, bei dem als Materal Invar verwendet wird.

9. Befestigungssystem gemäß einem der vorhergehenden Ansprüche, bei dem die zweiten Endabschnitte (32) nebeneinanderliegender Befestigungselemente (30) durch Lücken von einander getrennt sind.

10. Befestigungssystem gemäß einem der vorhergehenden Ansprüche, bei dem der zweite Endabschnitt (32) jedes Befestigungselementes (30) mittels Kleber mit dem Gehäuse verbunden ist.

**Revendications**

1. Système de montage destiné à supporter un transistor (14) de précision en alignement espacé avec un boîtier (12) de support, le système de montage comprenant plusieurs moyens de montage (30), chaque moyen de montage ayant des première et seconde extrémités (34, 32) et une partie intermédiaire élastique (36), la première extrémité (34) de chaque moyen de montage (30) étant reliée au transducteur (14), la seconde extrémité (32) de chaque moyen de montage (30) étant reliée au boîtier (12), au moins la première extrémité (34) étant composée d'une substance qui possède un coefficient de dilatation thermique approximativement égal au coefficient de dilatation thermique du transducteur (14), la partie intermédiaire (36) de chaque moyen de montage (30) étant conçue pour produire une faible résistance à un mouvement relatif entre le transducteur (14) et le boîtier (12) dans une direction radiale et une résistance élevée à un mouvement relatif entre le transducteur (14) et le boîtier (12) dans des directions normales à la direction radiale, de manière qu'une dilatation ou une contraction thermique différentielle entre le transducteur et le boîtier ne charge pas le transducteur ou ne provoque pas un défaut d'alignement entre le transducteur et le boîtier, caractérisé en ce que les premières extrémités (34) de moyens de montage adjacents (30) sont reliées entre elles au moyen de sections (38) de pont, de manière que les moyens de montage (30) et les sections de pont (38) forment un anneau continu (16) de montage, les sections de pont (38) étant composées d'une substance ayant un coefficient de dilatation thermique approximativement égal ou coefficient de dilatation thermique du transducteur (14).

2. Système de montage selon la revendication 1, dans lequel chaque partie intermédiaire (36) comprend une poutre ayant un axe souple et deux axes non souples normaux entre eux et à l'axe souple, chaque poutre ayant son axe souple orienté dans la direction radiale.

3. Système de montage selon la revendication 2, dans lequel le largeur (W) et la longueur (L) de chaque poutre sont sensiblement supérieures à l'épaisseur (T) de la poutre de manière que l'axe souple de la poutre corresponde à la dimension en épaisseur (T), et dans lequel la dimension en épaisseur (T) de la poutre est alignée avec la direction radiale de manière que la poutre ait une résistance relativement faible à une dilatation thermique différentielle entre le transducteur et le boîtier, et une résistance élevée à une translation et une rotation globales du transducteur par rapport au boîtier.

4. Système de montage selon la revendication 2 ou la revendication 3, dans lequel le transducteur (14) est de forme globalement cylindrique, dans lequel l'axe souple de chaque poutre coupe l'axe central du transducteur (14) et dans lequel la dimension en longueur (L) de chaque poutre est alignée avec l'axe du cylindre formé par le transducteur (14).

5. Système de montage selon la revendication 4, dans lequel les premières extrémités (34) et les sections de pont (38) forment une surface de montage cylindrique continue tournée vers l'intérieur, et dans lequel l'anneau de montage (16) est relié au transistor (14) au niveau de la surface de montage.

6. Système de montage selon la revendication 5, dans lequel le transducteur (14) comprend une partie cylindrique (27) de montage, dans lequel l'anneau (16) de montage est relié au transducteur (14) au niveau de ladite partie (27) de montage, et dans lequel la partie (27) de montage et l'anneau (16) de montage sont composés de la même substance.

7. Système de montage selon la revendication 6, dans lequel l'anneau (16) de montage est relié à la partie (27) de montage par soudage.

8. Système de montage selon l'une quelconque des revendications précédentes, dans lequel la substance est de l'Invar.

9. Système de montage selon l'une quelconque des revendications précédentes, dans lequel les secondes extrémités (32) de moyens de montage adjacents (30) sont séparées les unes des autres par des intervalles.

10. Système de montage selon l'une quelconque des revendications précédentes, dans lequel la seconde extrémité (32) de chaque moyen (30) de montage est reliée au boîtier (12) au moyen d'un adhésif.

*Fig. 1.*

*Fig. 2.*

1

*Fig. 4.*

*Fig. 3.*